# FASCICULE DE BREVET EUROPEEN

(11) **EP 0 398 831 B1**
(45) Date de publication et mention de la délivrance du brevet: **09.03.1994**
(21) Numéro de dépôt: 90460023.6
(22) Date de dépôt: 15.05.1990
(51) Int. Cl.: F16L 59/16, E04F 17/02

(54) **Conduits métalliques rigides isolés et leurs assemblages**
Starre isolierte Metalleitungen und ihre Verbindung
Rigid insulated metal conduits and their connection

(30) Priorité: 18.05.1989 FR 8906688
(43) Date de publication de la demande: 22.11.1990
(73) Titulaire: Société Etablissements JONCOUX SA, F-35761 SAINT GREGOIRE CEDEX (FR)
(72) Inventeur: Renson, François, F-35590 Saint-Gilles (FR)
(74) Mandataire: Le Guen, Louis François

(56) Documents cités:
- EP-A- 0 060 316
- EP-A- 0 148 717
- AT-B- 323 386
- CH-A- 480 520
- DE-B- 1 534 782

## Description

La présente invention concerne des conduits métalliques rigides isolés, formés chacun respectivement d'un tube externe et d'un tube interne entre lesquels se loge une couche de matière isolante, comportant chacun respectivement à une extrémité, un embout mâle et, à son autre extrémité, un embout femelle. Plus particulièrement, l'invention s'applique à des conduits de fumée isolés thermiquement.

Les conduits de ce type sont constitués de deux tubes métalliques concentriques, l'un interne et l'autre externe, entre lesquels on loge une matière thermiquement isolante, telle que de la laine de céramique. Dans les assemblages de tels conduits, on doit particulièrement éviter la création de ponts thermiques et assurer l'étanchéité complète.

A titre d'information, l'état de la technique dans ce domaine comprend les documents US-A-2 457 470, CH-A-585 834, FR-A-2 566 095, EP-A-0 060 316 et DE-B-1 534 782. Des conduits selon le préambule de la revendication 1 sont connus du document EP-A-0 148 717.

Un objet de la présente invention consiste à prévoir de tels conduits dont les extrémités des tuyaux rendent leurs assemblages particulièrement étanches.

Cet objet est atteint par les caractéristiques de la deuxième partie de la revendication 1.

Suivant une autre caractéristique, une seconde gorge, creusée vers l'intérieur, est prévue sur le tube externe de l'embout femelle au-delà de la partie de même diamètre que ledit tube externe, un collier est prévu dont les bords tombés s'engagent, après assemblage des conduits, dans les première et seconde gorges, le serrage du collier appliquant fermement le bord tombé du tube externe de l'embout femelle sur la première gorge.

Suivant une autre caractéristique, des entretoises sont prévues entre les extrémités des tubes de l'embout femelle pour les maintenir concentriques.

Suivant une autre caractéristique, les tubes internes et externes des embouts mâle et femelle sont tronconiques et le tube interne de l'embout femelle comporte un bord tombé vers l'extérieur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 est la vue d'une demi-coupe longitudinale de l'assemblage de deux conduits A et B suivant l'invention, et
la Fig. 2 est une vue en plan de l'extrémité supérieure du conduit A de l'assemblage de la Fig. 1.

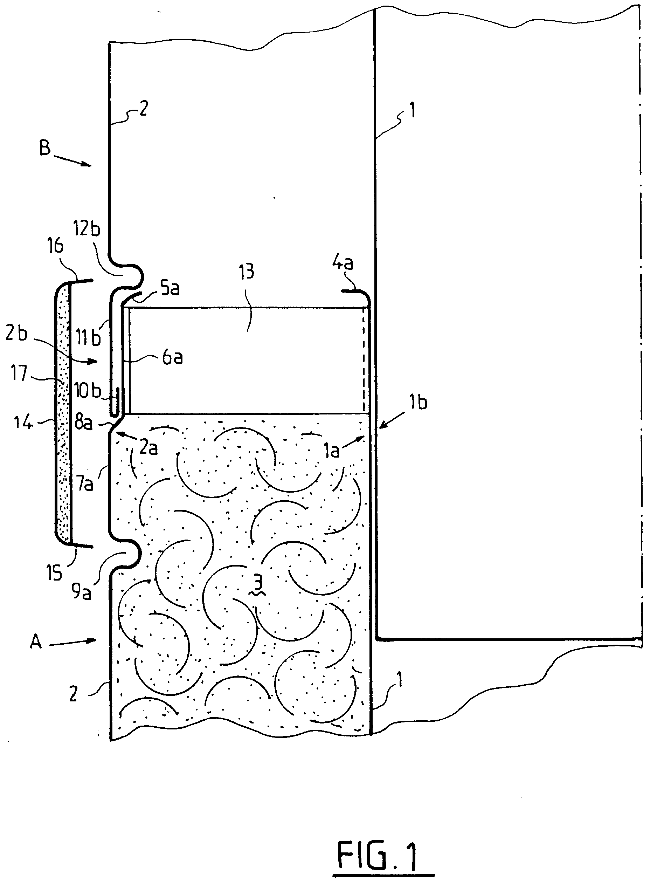

Chaque conduit, Fig. 1, se compose d'un tube intérieur 1 et d'un tube extérieur 2 entre lesquels se loge une couche 3 de matière isolante. A la Fig. 1, qui montre l'assemblage vertical de deux conduits A et B, on a désigné l'extrémité supérieure du tube interne du tube 1 du conduit A par 1a, celle de son tube externe par 2a, l'extrémité inférieure du tube interne 1 du conduit B par 1b et celle de son tube externe par 2b. Dans les caractéristiques ci-dessus, on a désigné l'ensemble 1a et 2a par embout femelle, et l'ensemble 1b et 2b par embout mâle. Les tubes 1 et 2 sont légèrement tronconiques. En pratique, le tube intérieur a une diamètre décroissant vers l'extrémité 1b et le tube extérieur 2 un diamètre décroissant vers l'extrémité 2a. Les demi-angles au sommet des troncs de cône sont très faibles.

L'extrémité de la partie 1a a un bord 4a tombé vers l'extérieur de manière à faciliter l'emboîtement de la partie mâle 1b dans la partie femelle 1a.

La partie 2a comporte, en partant de son extrémité où est prévu un bord 5a tombé vers l'intérieur, une partie 6a de diamètre légèrement inférieur à celui du tube 2, une partie 7a de même diamètre que le tube 2, avec entre les parties 6a et 7a, une partie conique de raccordement 8a, une gorge 9a creusée vers l'intérieur, et le tube 2 proprement dit.

La partie 2b comporte, en partant de son extrémité où est prévu un bord 10b complètement rabattu vers l'intérieur, une partie 11b de même diamètre que le tube 2, une gorge 12b creusée vers l'intérieur, et le tube 2 proprement dit.

En pratique, vers l'extrémité 1b, le tube 1 dépasse en longueur le tube 2 d'une distance égale à la longueur de la partie 7a. Egalement, les parties 11b, 6a et 7a sont presque de même longueur. Autrement dit, une fois les deux conduits A et B assemblés, le bord tombé 5a vient toucher la partie inférieure interne de la gorge 12b, et le bord rabattu 10b vient s'appuyer sur la partie de raccordement 8a. Comme les parties 1a et 1b sont tronconiques, la partie mâle 1b s'adapte bien à la partie femelle 1a.

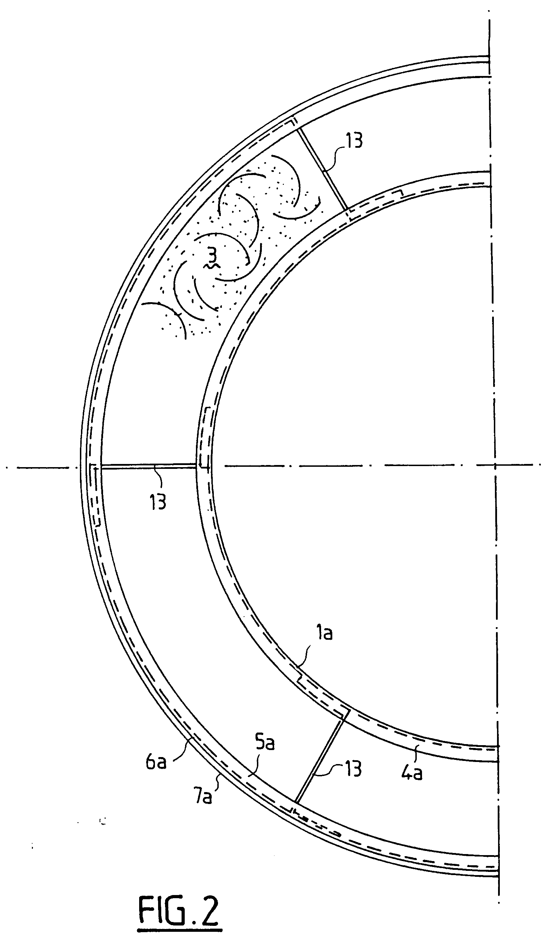

Entre la partie annulaire 6a et la portion de la partie la qui lui fait face, sont prévues, régulièrement angulairement espacées le long de la circonférence, des entretoises 13. Comme le montre la coupe de la Fig. 2, chaque entretoise 13 se compose d'une partie radiale prolongée, d'un côté, par une partie en arc de cercle soudée à la partie 1a et, de l'autre côté, par une partie en arc de cercle soudée derrière la partie 6a. En coupe, chaque entretoise 13 a sensiblement la forme d'un Z. Les entretoises 13 servent à solidariser les tubes 1 et 2 de chaque conduit et à maintenir l'écartement entre les partie 1a et 2a constant et bien défini.

Comme le montre la Fig. 1, l'assemblage est complété par un collier 14 qui est formé d'une bande dont les bords 15 et 16 sont tombés vers l'intérieur. La largeur du collier 14 est telle que les bords tombés 15 et 16 peuvent entrer respectivement dans les gorges 9a et 12b afin d'assurer le maintien longitudinal de l'assemblage des conduits A et B.

En pratique, le fond du collier 14 étant vertical, comme montré à la Fig. 1, les surfaces tronconiques des bords 15 et 16 font respectivement un angle de moins et plus 15° environ avec le plan horizontal. De plus, chacun des bords des gorges 9a et 12b qui reçoivent respectivement les bords 15 et 16 fait également un angle de l'ordre de 15° avec l'horizontale. Ainsi, le serrage du collier 14 autour de l'ensemble assure un bon serrage longitudinal des conduits. Ce serrage longitudinal provoque notamment un serrage efficace de 5a contre 12b et également de 10b contre 8a. L'étanchéité est donc assurée par l'application du bord 5a contre le bourrelet constitué, à l'intérieur, par la gorge 12b. Elle est complétée par l'application du bord 10b contre la partie tronconique 8a. Sur le dessin, on a laissé apparaître un intervalle entre ces parties uniquement pour en améliorer la clarté.

On notera que l'espace annulaire entre les tubes 1 et 2 peut être facilement rempli d'une matière thermiquement isolante 3, telle que de la fibre de céramique. Le fond interne du collier 14 peut être aussi revêtu d'une couche de papier de céramique 17, qui contribue à l'étanchéité et l'isolement thermique.

On notera également que le collier 14 ne crée pratiquement pas d'augmentation du diamètre des conduits.

## Revendications

1. Conduits métalliques rigides isolés, formés chacun respectivement d'un tube externe (2) et d'un tube interne (1) entre lesquels se loge une couche de matière isolante (3), comportant chacun respectivement à une extrémité, un embout mâle (1b,2b) et, à son autre extrémité, un embout femelle (1a,2a), le tube externe (2a) de l'embout femelle comportant, en partant de son extrémité (5a) où est réalisé un bord tombé vers l'intérieur, une partie (6a) de diamètre légèrement inférieur à celui dudit tube externe, une partie (7a) de même diamètre que ledit tube externe, avec entre ces deux parties une partie tronconique de raccordement (8a), et le tube externe (2b) de l'embout mâle, dont le tube interne (1b) s'emboîte dans le tube interne (1a) de l'embout femelle, comportant, en partant de son extrémité (10b), une partie (11b) de même diamètre que ledit tube externe et une première gorge (12b), caractérisés en ce que la première gorge (12b) est creusée vers l'intérieur, la longueur de la partie de diamètre réduit (6a) étant égale à celle de la partie allant de l'extrémité (10b) jusqu'à la première gorge (12b), et en ce que le tube externe (2b) de l'embout mâle comporte, à son extrémité (10b), un bord complètement rabattu vers l'intérieur.

2. Conduits suivant la revendication 1, caractérisés en ce qu'une seconde gorge (9a), creusée vers l'intérieur, est prévue sur le tube externe (2a) de l'embout femelle au-delà de la partie (7a) de même diamètre que ledit tube externe, et en ce qu'un collier (14) est prévu dont les bords tombés (15, 16) s'engagent, après assemblage des conduits, dans les première et seconde gorges (12b, 9a), le serrage du collier (14) appliquant fermement le bord tombé (5a) sur le fond de la première gorge (12b).

3. Conduits suivant l'une des revendications 1 et 2, caractérisés en ce que des entretoises (13) sont prévues entre les extrémités des tubes de l'embout femelle pour les maintenir concentriques.

4. Conduits suivant l'une des revendications, 1 à 3, caractérisés en ce que les tubes internes (1a, 1b) et externes (2a,2b) des embouts mâle et femelle sont tronconiques et en ce que le tube interne (1a) de l'embout femelle comporte un bord (4a) tombé vers l'extérieur.

## Patentansprüche

1. Starre, isolierte Metalleitungen, welche jeweils von einem Außenrohr (2) und einem Innenrohr (1) gebildet werden, zwischen denen eine Lage (3) aus Isoliermaterial angeordnet ist, welche jeweils an einem Ende ein männliches Ansatzstück (1b, 2b) und am anderen Ende ein weibliches Ansatzstück (1a, 2a) aufweisen, das Außenrohr (2a) mit dem weiblichen Ansatzstück ausgehend von dem Ende (5a), an dem ein nach innen abnehmender Rand vorgesehen ist, ein Teil (6a) mit einem geringfügig kleineren Durchmesser als jener des Außenrohrs, ein Teil (7a) mit gleichem Durchmesser wie das Außenrohr und zwischen den beiden Teilen ein kegelstumpfförmiges Verbindungsteil (8a) aufweist, das Außenrohr (2b) am männlichen Ansatzstück, dessen Innenrohr (1b) passend in dem Innenrohr (1a) des weiblichen Ansatzstückes sitzt, ausgehend von dem Ende (10b) ein Teil (11b) mit gleichem Durchmesser wie das Außenrohr und eine erste Hohlkehle (12b) aufweist, **dadurch** **gekennzeichnet**, daß die erste Hohlkehle (12b) nach innen hohl ausgebildet ist, die Länge des Teils (6a) mit vermindertem Durchmesser gleich jener des Teils ausgehend von dem Ende (10b) bis zur ersten Hohlkehle (12b) ist, und daß das Außenrohr (2b) am männlichen Ansatzstück an seinem Ende (10b) einen vollständig nach innen versenkten Rand aufweist.

2. Leitungen nach Anspruch 1, **dadurch** **gekennzeichnet,** daß eine zweite Hohlkehle (9a), welche nach innen hohl ausgebildet ist, auf dem Außenrohr (2a) des weiblichen Ansatzstückes über den Teil (7a) mit dem gleichen Durchmesser wie das Außenrohr hinausgehend vorgesehen ist, und daß eine Schelle (14) vorgesehen ist, deren abnehmende Ränder (15, 16) nach der Montage der Leitungen in die ersten und zweiten Hohlkehlen (12b, 9a) eingreifen und das Einspannen der Schelle (14) den abnehmenden Rand (5a) am Grund der ersten Kohlkehle (12b) geschlossen hält.

3. Leitungen nach einem der Ansprüche 1 und 2, **dadurch** **gekenn-** **zeichnet,** daß Zwischenstücke (13) zwischen den Enden der Rohre des weiblichen Ansatzstückes vorgesehen sind, um diese in konzentrischer Anordnung zu halten.

4. Leitungen nach einem der Ansprüche 1 bis 3, **dadurch** **gekenn-** **zeichnet,** daß die Innenrohre (1a, 1b) und die Außenrohre (2a, 2b) an den männlichen und weiblichen Ansatzstücken kegelstumpfförmig ausgebildet sind, und daß das Innenrohr (1a) des weiblichen Ansatzstückes einen nach außen abnehmenden Rand (4a) aufweist.

## Claims

1. Rigid insulated metal conduits, each formed respectively of an outer tube (2) and an inner tube (1) between which is placed a layer of insulating material (3), each comprising respectively at one end thereof, a male coupling (1b,2b), at the other end thereof a female coupling (1a,2a), the outer tube (2a) of the female coupling comprising, starting at its end (5a) where there is an edge bent inwardly, a part (6a) of slightly smaller diameter than that of the outer tube , a part (7a) of the same diameter as the said outer tube, between these two pieces there being a truncated transition part (8a), and the outer tube (2b) of the male coupling, of which the inner tube (1b) encases itself in the female coupling (1a) of the inner tube (1), comprising, starting from its end (10b), a part (11b) of the same diameter as the said outer tube and a 1st. indent (12b), characterized in that the 1st. indent (12b) is pressed inwardly, the length of the part of reduced diameter (6a) being equal to that of the part going from the end (10b) to the 1st. indent (12b), and in that the outer tube (2b) of the male coupling comprises, at its end (10b) an edge completely turned back towards the inside.

2. Conduits in accordance with claim 1, characterized in that a second indent (9a), pressed inwardly, is provided in the outer tube (2a) of the female coupling beyond the part (7a) of the same diameter as the said outer tube, and in that a collar (14) is provided, the edges (15,16) of which engage after assembly of the conduits, with the 1st. and 2nd. indents (12b,9a), the securing of the collar (14) causing the bent edge (5a) to be firmly pressed onto the base of the 1st. indent (12b).

3. Conduits according to one of the claims 1 and 2, characterized in that the struts (13) are provided between the ends of the tubes of the female coupling to maintain them concentric.

4. Conduits according to one of the claims 1 to 3, characterized in that the inner tubes (1a,1b) and the outer tubes (2a,2b) of the male and female coupling are truncated and in that the inner tube (1a) of the female coupling comprises an edge (4a) bent outwardly.
